# EUROPÄISCHE PATENTSCHRIFT

(11) **EP 3 611 779 B1**
(45) Veröffentlichungstag und Bekanntmachung des Hinweises auf die Patenterteilung: **09.10.2024**
(21) Anmeldenummer: 19190679.1
(22) Anmeldetag: 08.08.2019
(51) Int. Cl.: H01M 50/204

(54) **BATTERIESYSTEM FÜR EIN KRAFTFAHRZEUG**
BATTERY SYSTEM FOR A MOTOR VEHICLE
SYSTÈME DE BATTERIE POUR VÉHICULE AUTOMOBILE

(30) Priorität: 17.08.2018 DE 102018120139
(43) Veröffentlichungstag der Anmeldung: 19.02.2020
(73) Patentinhaber: Volkswagen AG, 38440 Wolfsburg (DE); Illinois Tool Works Inc., Glenview, IL 60025 (US)
(72) Erfinder: MAUSOLF, Karsten, 29614 Soltau (DE); DE WILDE, Ingo, 2952 Alblasserdam (NL); WILLGEROTH, Markus, 38100 Braunschweig (DE); UEHRLICH, Roland, 38102 Braunschweig (DE)
(74) Vertreter: Freischem & Partner Patentanwälte mbB

(56) Entgegenhaltungen:
- WO-A1-2009/103464

## Beschreibung

Die Erfindung betrifft ein Batteriesystem für ein Kraftfahrzeug gemäß dem Oberbegriff des Anspruchs 1, insbesondere ein Batteriesystem, das zumindest teilweise auch für den Antrieb eines Kraftfahrzeuges vorgesehen ist. Derartige Batteriesysteme weisen in der Praxis üblicherweise eine Nennleistung (Dauerleistung) von mindestens 2 kW auf und/oder geben Stromstärken von mindestens 40 A ab. Derartige Batteriesysteme sind - unabhängig davon oder in Ergänzung dazu - häufig aus mehreren miteinander verschalteten Zellmodulen gebildet. Dabei weist jedes Zellmodul ein Gewicht von mindestens 5 kg, mindestens 15 kg, mindestens 20 kg, mindestens 25 kg oder mindestens 30 kg auf. Erfindungsgemäße Batteriesysteme aus mehreren solcher Zellmodule weisen insgesamt häufig ein Gewicht von mindestens 75 kg, mindestens 200 kg, mindestens 600 kg, mindestens 700 kg oder mindestens 800 kg auf. Die Abmaße erfindungsgemäßer Batteriesysteme sind in der Praxis regelmäßig so, dass zumindest eine Seite eines Zellmoduls eine Länge von mindestens 10 cm aufweist, meist auch mindestens 25 cm, mindestens 30 cm, mindestens 40 cm oder mindestens 50 cm. Diese Längenangaben gelten häufig auch für mindestens eine weitere Dimension, z.B. die Breite, oder sogar für beide weiteren Dimensionen, d.h. die Breite und die Höhe. Diese Angaben gelten dementsprechend ebenso für Batteriesysteme mit mindestens einem solchen Zellmodul. Die erfindungsgemäßen Batteriesysteme und die darin angeordneten Zellmodule sind daher - im Vergleich zu Energiespeichern aus anderen Anwendungen, wie z.B. Energiespeichern in Haushaltsgeräten - relativ groß und schwer.

Aus DE 10 2013 021 312 A1 ist eine Batterie bekannt, welche eine Anzahl elektrisch seriell und/oder parallel verschalteter Einzelzellen, eine Temperiervorrichtung und eine Anzahl von Wärmeleitelementen umfasst, wobei ein Wärmeleitelement zumindest eine Einzelzelle mit der Temperiervorrichtung thermisch koppelt. Die Wärmeleitelemente sind jeweils aus zwei, einen Hohlraum einschließenden Hälften gebildet, wobei zumindest eine der Hälften ein vollflächiges Federelement bildet, dessen von der jeweils anderen Hälfte beabstandete Fläche zumindest einer Flachseite einer Elektrodenfolienanordnung entspricht, wobei eine von dem Federelement erzeugte Federkraft im Wesentlichen senkrecht zu der Flachseite der Elektrodenfolienanordnung wirkt.

Aus DE 10 2015 113 187 A1 sind eine Batterieeinrichtung und ein Verfahren zur Herstellung einer solchen Batterieeinrichtung bekannt. Die Batterieeinrichtung ist für ein wenigstens teilweise elektrisch betriebenes Fahrzeug mit einer Mehrzahl von Batteriemodulen mit jeweils wenigstens einer Batteriezelle und mit einer Aufnahmeeinrichtung zur Aufnahme der Batteriemodule vorgesehen. Dabei ist jeweils ein Batteriemodul in einem Kontaktbereich zur Wärmeleitung an die Aufnahmeeinrichtung angebunden, wobei an einem Batteriemodul ein Wärmeleitelement angeordnet ist, welches sich in den Kontaktbereich und über diesen hinaus in einen Freibereich des Batteriemoduls erstreckt. Im Freibereich ist wenigstens ein elastisches Deformationselement zum Andrücken des Wärmeleitelements an das Batteriemodul angeordnet. Als Wärmeleitelement wird insbesondere eine flexible Wärmeleitmatte beschrieben, die auch gemeinsam mit einer Trägerlage und einem Deformationselement in einer Verbundmatte zusammengefügt sein kann.

Aus DE 10 2016 109 931 A1 sind eine Kühlvorrichtung mit einer Kühlplatte für einen darauf angeordneten oder anordenbaren zu kühlenden Energiespeicher bekannt, der mit der Kühlplatte in Kontakt steht. Dabei sind zwischen dem Energiespeicher und der Kühlplatte eine thermisch-leitende Wärmeleitfolie und eine thermisch-leitende Füllschicht angeordnet.

Aus WO 2009/103464 A1 ist ein als Batterie bezeichnetes Batteriesystem mit einer in einem nicht dargestellten Batteriegehäuse angeordneten Wärmeleitplatte zum Temperieren des Batteriesystems bekannt. Dabei sind mehrere elektrisch parallel und/oder seriell miteinander verschaltete Einzelzellen wärmeleitend mit der Wärmeleitplatte verbunden. Ferner ist mindestens ein Federelement vorgesehen, mit welchem die Einzelzellen definiert an die Wärmeleitplatte pressbar sind.

Die aus dem Stand der Technik bekannten Lösungen haben den Nachteil, dass sie aus einer Vielzahl von Einzelelementen bestehen und somit aufwändig zu montieren sind und/oder nur eine Eignung für ein geringes Volumen aufweisen und somit als sogenannte Gapfiller zum variablen Ausfüllen und thermischen Überbrücken von Freiräumen in einem Batteriesystem für ein Kraftfahrzeug nur bedingt geeignet sind.

Der Erfindung liegt die Aufgabe zugrunde, ein Batteriesystem für ein Kraftfahrzeug zur Verfügung zu stellen, das eine gute thermische und zugleich toleranzausgleichende Anbindung der in diesen angeordneten Elementen aufweist, das ein niedriges Gewicht aufweist und das einfach und praktisch zu handhaben ist.

Die Lösung der Aufgabe erfolgt erfindungsgemäß mit den Merkmalen der unabhängigen Ansprüche, Weitere praktische Ausführungsformen und Vorteile der Erfindung sind in Verbindung mit den abhängigen Ansprüchen beschrieben.

Ein erfindungsgemäßes Batteriesystem für ein Kraftfahrzeug, das in einem Batteriesystemgehäuse angeordnet ist, weist ferner mindestens ein Zellmodul mit einem Zellmodulgehäuse und mindestens ein Kühlsystem für das Zellmodul auf. Ferner weist das Batteriesystem mindestens eine, als Lückenfüller (Gapfiller) dienende Anordnung aus einer Vielzahl von Folienrollen auf, die jeweils mindestens eine elastische Rollenfüllung und eine die mindestens eine Rollenfüllung umhüllende Folienumhüllung umfasst, wobei mehrere Folienrollen (40) auf einer flächigen Trägermatte (48) angeordnet und fest mit dieser verbunden sind und die Folienrollen (40) zumindest teilweise
a) unmittelbar zwischen einer Wand eines Zellmodulgehäuses und dem mindestens einen Kühlsystem (22) angeordnet sind und/oder
b) unmittelbar zwischen dem Zellmodulgehäuse und einer zwischen dem Zellmodulgehäuse und dem mindestens einen Kühlsystem (22) angeordneten Wärmeleitplatte (26) angeordnet sind.

Als Folienumhüllung sind in diesem Zusammenhang insbesondere Folien aus einem wärmeleitenden Material geeignet. Darunter sind vor allem solche Folien zu verstehen, die einen Wärmeleitwert von mindestens 10 W/mK, bevorzugt mindestens 15 W/mK und weiter bevorzugt mindestens 20 WImK aufweisen. Folienrollen lassen sich durch einfaches Umwickeln von einer elastischen Rollenfüllung einfach und kostengünstig herstellen. Dabei ergibt sich aufgrund der elastischen Rollenfüllung eine vorteilhafte toleranzausgleichende Anbindung von den in dem Batteriesystem angebundenen Elementen, wenn die entsprechenden Folienrollen in Freiräumen angeordnet werden. Für die Verarbeitung und Montage ergibt sich damit zum einen eine einfache Handhabbarkeit und zum anderen die Erforderlichkeit von nur geringen Verpresskräften. Je nach Material können hohe Kompressionsraten in Verbindung mit den Folienrollen auftreten.

insbesondere in Verbindung mit Folienumhüllungen aus einem wärmeleitenden Material, wie vorstehend beschrieben, ergibt sich der Vorteil, dass über die Folienumhüllung ein guter Wärmetransport innerhalb des Batteriesystems erfolgen kann. Dieser Wärmetransport ist unabhängig von der Kompression. Durch die Auswahl einer geeigneten Rollenfüllung kann so ein Batteriesystem mit einem geringen Gesamtgewicht erzielt werden.

Das Handling eines erfindungsgemäßen Batteriesystems wird weiter vereinfacht, weil mehrere Folienrollen auf einer flächigen Trägermatte angeordnet sind. Dadurch können flächige Trägermatten mit einer Vielzahl von Folienrollen vorproduziert und als solche mit nur einem Arbeitsgang in einem erfindungsgemäßen Batteriesystem angeordnet werden.

In Bezug auf die Erzielung eines Batteriesystems mit nur geringem Gesamtgewicht wird insbesondere auf die Möglichkeit verwiesen, für die Rollenfüllung ein elastisches Drahtgeflecht, ein elastisches Fasergebilde und/oder einen Schaumwerkstoff zu verwenden. Die Verwendung eines Drahtgeflechts hat in diesem Zusammenhang den weiteren Vorteil, dass über dieses auch eine vorteilhafte Wärmeleitung erfolgen kann, sodass sich besonders vorteilhafte wärmeleitende Eigenschaften ergeben können. Doch selbst wenn ein elastisches Fasergebilde oder ein Schaumwerkstoff verwendet wird, ergibt sich mit einer Folienumhüllung aus einem wärmeleitenden Material eine vorteilhafte Wärmeübertragung, die in diesem Fall im Wesentlichen über die Folienumhüllung erfolgt.

In einer weiteren praktischen Ausführungsform eines erfindungsgemäßen Batteriesystems umfasst die Folienumhüllung eine metallische Folie oder Beschichtung, eine Graphit aufweisende Folie oder Beschichtung, eine Kohlefasern aufweisende Folie und/oder eine Graphem aufweisende Folie. Mit Folien sind in diesem Zusammenhang insbesondere solche Elemente gemeint, die sich bereits aufgrund von Schwerkrafteinwirkung und einer äußerst geringen Biegesteifigkeit stets in Richtung der Schwerkraft nach unten neigen, wenn diese nur einseitig gehalten werden.

In einer weiteren praktischen Ausführungsform eines erfindungsgemäßen Batteriesystems sind die Folienrollen zumindest teilweise in unmittelbarem Kontakt zu einer, in einem Gehäuse angeordneten, zu kühlenden elektrischen Leitung eines Batteriesystemelements angeordnet.

Unter einem Batteriesystemelement im vorstehenden Sinne wird insbesondere eine sogenannte Batterieanschlussbox verstanden. In den vorstehend genannten Anordnungssituationen sind erfindungsgemäße Batteriesysteme mit Folienrollen (Gapfiller) besonders vorteilhaft einsetzbar, insbesondere wenn sich temperaturbedingt die Freiräume hinsichtlich ihres Volumens verändern. Als Gehäuse sind insoweit jegliche Gehäuse zu verstehen, die in Verbindung mit Batteriesystemen zum Einsatz kommen, beispielsweise Gehäuse von Batterieanschlussboxen, Zellmodulgehäuse und/oder größere Gehäuse, in denen ein oder mehrere Batterieanschlussboxen und/oder ein oder mehrere Zellmodulgehäuse angeordnet sind.

In Verbindung mit einer flächigen Trägermatte ist es besonders bevorzugt, wenn die Folienrollen beabstandet zueinander auf einer Rollenseite der Trägermatte angeordnet sind. Es ist auch möglich, die Folienrollen beabstandet zueinander auf zwei gegenüberliegenden Rollenseiten der Trägermatte anzuordnen. Die beabstandete Anordnung der Folienrollen zueinander hat den Vorteil, dass zwischen zwei Folienrollen ausreichend Platz verbleibt, um ein Quetschen der Folienrollen in die Breite mit niedrigen Verpresskräften zu ermöglichen.

Darüber hinaus ermöglicht es die beabstandete Anordnung von Folienrollen auf einer Rollenseite der Trägermatte, dass mindestens zwei Trägermatten vorgesehen sein können, auf welchen die Folienrollen derart beabstandet zueinander angeordnet sind, dass die Trägermatten jeweils mit den Rollenseiten derart zueinander ausgerichtet und angeordnet werden können, dass die Folienrollen einer ersten Trägermatte zumindest teilweise in Lücken zwischen Folienrollen einer zweiten Trägermatte eingreifen können. So kann eine vollständig oder teilweise miteinander kämmende Anordnung von einer ersten Trägermatte und einer zweiten Trägermatte erzielt werden, bei welchen die Folienrollen von sich gegenüberliegenden Rollenseiten jeweils in Lücken zwischen zwei Folienrollen der anderen Trägermatte eingreifen. So kann durch einfache Handhabung eine sehr gut wärmeleitende Lückenfüller-Anordnung in einem erfindungsgemäßen Batteriesystem erzielt werden.

In einer weiteren praktischen Ausführungsform eines erfindungsgemäßen Batteriesystems weisen die Folienrollen eine im Querschnitt runde, quaderförmige oder trapezförmige Geometrie auf. Die Form des entsprechenden Querschnitts wird vorzugsweise in Abhängigkeit der Elastizität der elastischen Rollenfüllung gewählt, wobei mit zunehmender Elastizität runde Querschnitte zu bevorzugen sind, die sich mit geringen Kompressionsraten hinsichtlich ihrer Form gut an zu füllende Lücken anpassen können.

Schließlich wird noch darauf verwiesen, dass die Folienrollen und/oder eine Trägermatte, auf welchen die Folienrollen angeordnet sind, vollständig oder teilweise mit einer folienartigen Umhüllung und/oder einer adhäsiven Beschichtung versehen sein können. Damit können die Wärmeleitfähigkeit weiter verbessert und/oder die Handhabung beziehungsweise Montage von Folienrollen und/oder Trägermatten in erfindungsgemäßen Batteriesystemen verbessert werden, insbesondere weil durch eine adhäsive Beschichtung eine während der Montage gewählte Montageposition relativ in einem erfindungsgemäßen Batteriesystem fixiert werden kann und so Relativbewegungen der Folienrollen und/oder Trägermatten, welche insbesondere bei fahrzustandsbedingten Krafteinwirkungen und/oder Schwingungsanregungen auftreten könnten, effizient entgegengewirkt wird.

In einer weiteren praktischen Ausführungsform eines erfindungsgemäßen Batteriesystems weist die Folienumhüllung eine oder mehrere Öffnungen (Perforationen) auf. Derartige Öffnungen sind vorzugsweise so klein gewählt, dass keine Metallspäne oder sonstige Partikel aus dem Inneren der Folienumhüllung nach außen austreten können. Dies ist insbesondere in Verbindung mit der Verwendung von Metallfasern als elastische Rollenfüllung von besonderem Interesse.

Weitere praktische Ausführungsformen der Erfindung sind nachfolgend im Zusammenhang mit den Zeichnungen beschrieben. Es zeigen:
- Fig. 1: eine schematische Darstellung eines Batteriesystems in einer ersten Ausführungsform,
- Fig. 2: eine schematische Darstellung eines Batteriesystems in einer weiteren Ausführungsform,
- Fig. 3: einen Ausschnitt einer Trägermatte mit einer Vielzahl von darauf angeordneten Folienrollen in einer perspektivischen Darstellung auf die Rollenseite von schräg oben,
- Fig. 4: eine Darstellung einer Trägermatte in einer Ansicht von oben auf die Rollenseite,
- Fig. 5: eine Anordnung von zwei Trägermatten, die miteinander kämmend anordenbar sind während der Montage,
- Fig. 6: eine als Batteriesystem-Element dienende Batterieanschlussbox eines Batteriesystems mit einer als Lückenfüller dienenden Trägermatte mit nicht dargestellten Folienrollen in einer Explosionsdarstellung,
- Fig. 7: eine exemplarische Darstellung durch die in Figur 6 gezeigte Batterieanschlussbox mit montierter Trägermatte,
- Fig. 8a-c: verschiedene Anordnungen mit Folienrollen mit unterschiedlicher Querschnittsform und
- Fig. 9: eine alternative Anordnung von zwei Trägermatten, die miteinander kämmend anordenbar sind analog zu Fig. 5 während der Montage.

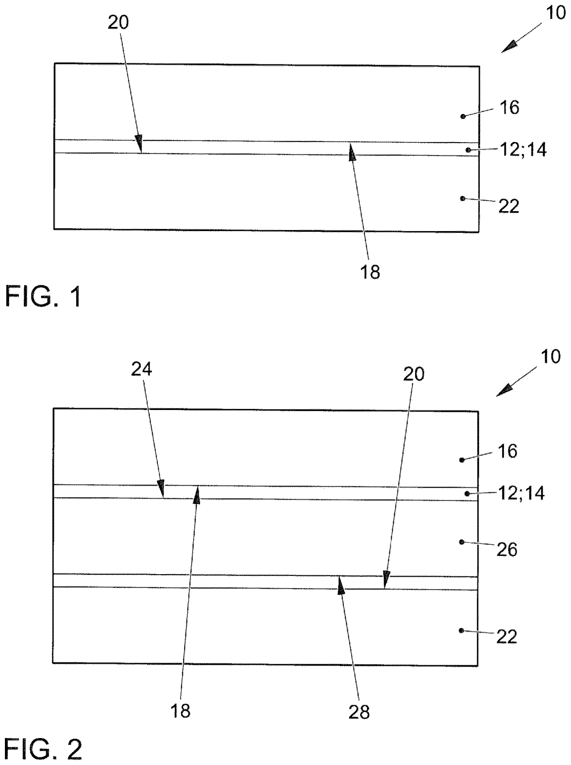

In den Figuren 1 und 2 sind zwei unterschiedliche Ausführungsformen für erfindungsgemäße Batteriesysteme 10 gezeigt, wobei in diesen und in allen weiteren Figuren für identische oder zumindest funktionsgleiche Elemente die gleichen Bezugszeichen verwendet werden.

Bei der Ausführungsform gemäß Fig. 1 ist eine nur schematisch dargestellte, als Lückenfüller 12 dienende Trägermatte 14 mit nicht dargestellten Folienrollen zwischen einer aus einem oder mehreren Zellmodulen 16 bestehenden Zellmodul-Kontaktfläche 18 und einer Kühlsystem-Kontaktfläche 20 eines beabstandet angeordneten Kühlsystems 22 angeordnet.

Bei der in Figur 2 gezeigten zweiten Ausführungsform ist ein ebenso gestalteter Lückenfüller 12 zwischen einer Zellmodul-Kontaktfläche 18 von einem oder mehreren Zellmodulen 16 und einer ersten Wärmeleitplatten-Kontaktfläche 24 einer Wärmeleitplatte 26 vorgesehen. Darüber hinaus ist eine weitere, als Lückenfüller 12 dienende Trägermatte 14 mit nicht dargestellten Folienrollen zwischen einer zweiten Wärmeleitplatten-Kontaktfläche 28 der Wärmeleitplatte 26 und der Kühlsystem-Kontaktfläche 20 des Kühlsystems 22 vorgesehen.

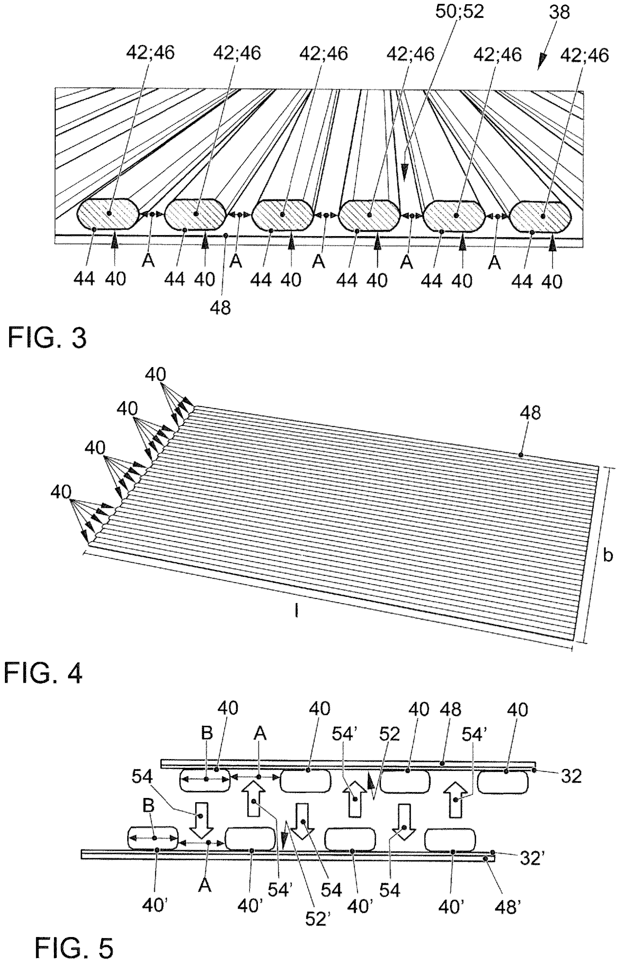

Figur 3 zeigt eine als Lückenfüller 12 dienende Anordnung 38 aus einer Vielzahl von Folienrollen 40, welche jeweils eine elastische Rollenfüllung 42 und eine die Rollenfüllung 42 umhüllende Folienumhüllung 44 umfasst. In der gezeigten Ausführungsform ist die Rollenfüllung 42 durch einen Schaumwerkstoff 46 gebildet. Die Folienrollen 40 sind auf einer flächigen Trägermatte 48 angeordnet und fest mit der Trägermatte 48 verbunden.

Wie aus Figur 3 ersichtlich ist, sind nur auf der Oberseite 50 der Trägermatte 48 Folienrollen 40 angeordnet. Die Oberseite 50 wird daher auch als Rollenseite 52 bezeichnet.

Wie aus Figur 3 ferner ersichtlich ist, sind die Folienrollen 40 jeweils parallel zueinander angeordnet. Benachbarte Folienrollen 40 weisen einen Abstand A zueinander auf.

Figur 4 zeigt eine gesamte Trägermatte 48, die in dem gezeigten Ausführungsbeispiel eine Länge l von etwa 500 mm aufweist. Bevorzugte Längen liegen zwischen 100 mm und 800 mm, besonders bevorzugt zwischen 200 mm und 600 mm.

Die Breite b der Trägermatte 48 beträgt in der gezeigten Ausführungsform ca. 150 mm. Bevorzugte Breiten b liegen zwischen 50 mm und 400 mm, insbesondere zwischen 100 mm und 300 mm.

Figur 5 zeigt eine schematische Darstellung einer Anordnung von zwei Trägermatten 48, 48', auf welchen analog zu den Figuren 3 und 4 Folienrollen 40, 40' angeordnet sind. Die Anordnung erfolgt in der gezeigten Ausführungsform durch eine auf der jeweiligen Trägermatte 48, 48' aufgebrachte adhäsive Beschichtung 32, 32'.

Wie in Figur 5 erkennbar ist, ist der Abstand A zwischen zwei benachbarten Folienrollen 40, 40' jeweils etwas größer als oder gleich groß gewählt wie die Breite B der Folienrollen 40, 40'. Dadurch lassen sich zwei Trägermatten 48, 48' jeweils mit ihren Rollenseiten 52, 52' derart zueinander ausrichten und anordnen, dass die Folienrollen 40, 40' einer ersten Trägermatte 48 in Lücken zwischen Folienrollen 40' einer zweiten Trägermatte 48' eingreifen können. Dies erfolgt durch Bewegung der Trägermatten 48, 48' in Richtung der Pfeile 54, 54'.

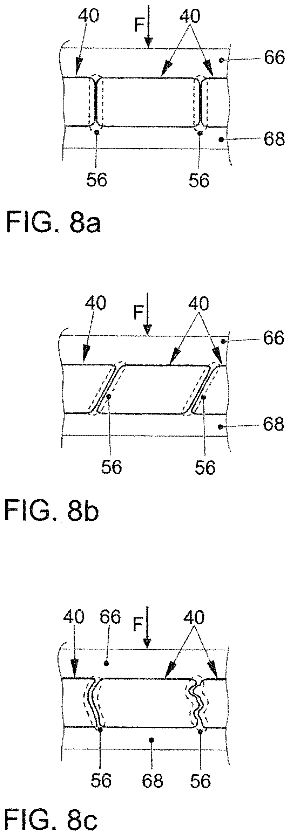

in den Figuren 8a, 8b und 8c sind drei verschiedene Anordnungen mit Folienrollen 40 mit unterschiedlicher Querschnittsform gezeigt. Allen Anordnung ist gemeinsam, dass jeweils zwischen einem ersten Bauteil 66 und einem zweiten Bauteil verschiedene Querstege 56 als thermische Verbindung zwischen dem ersten Bauteil 66 und dem zweiten Bauteil 68 gebildet sind. Die Querstege 56 bestehen jeweils aus einer doppellagigen Folienumhüllung 44 aus einem thermisch leitfähigen Material. Über diese Querstege 56 kann eine besonders gute und effiziente Wärmeübertragung von dem ersten Bauteil 66 auf das zweite Bauteil 68 erfolgen. Bei der in Figur 8a gezeigten Anordnung weisen die Folienrollen 40 eine ungefähr rechteckige Querschnittsform auf, bei der in Figur 8b gezeigten Anordnung eine parallelogrammförmige Querschnittsform und bei der in Figur 8c gezeigten Anordnung Querstege 56 in Form von Aufwerfungen. Figur 8c zeigt eine Anordnung im verbauten und verpressten Zustand. Durch das Verpressen bei der Montage entstehen die in Figur 8c gut erkennbaren Aufwerfungen im Bereich der Querstege 56.

in allen Fällen liegen die beiden Folienumhüllungen 44 unmittelbar aneinander an und bilden so einen doppellagigen, besonders gut wärmeleitfähigen Quersteg 56.

Ein Vorteil in Verbindung mit Batteriesystemen, in welchen ein oder mehrerer wärmeleitende Querstege 56 vorgesehen sind (insbesondere wie in den Fig. 8a-8c gezeigt), ist, dass die Wärmeleitung durch den Weg der Verpressung, d.h. durch die Intensität der Komprimierung der Folienrollen 40 (gemeint ist die Komprimierung jeweils in Richtung des in den Figuren 8a-8c gezeigten Kraftpfeiles F), nicht oder nur unwesentlich beeinflusst wird, da die Länge der Querstege 56 unabhängig vom Grad der Komprimierung in etwa erhalten bleibt, und zwar unabhängig davon, ob sich Aufwerfungen wie in Figur 8c bilden und/oder ob die Stege seitlich ausgelenkt werden wie in Figur 8b. Dies ist insbesondere im Vergleich zur Verwendung von Pasten, die beim Komprimieren verdrängt werden, ein großer Vorteil, weil das Wärmeleitverhalten des Batteriesystems so weitestgehend unabhängig von der jeweiligen manuellen oder maschinellen Montage und/oder unabhängig von den individuellen Komprimierungseigenschaften bestimmter Chargen von Folienrollen 40 sind.

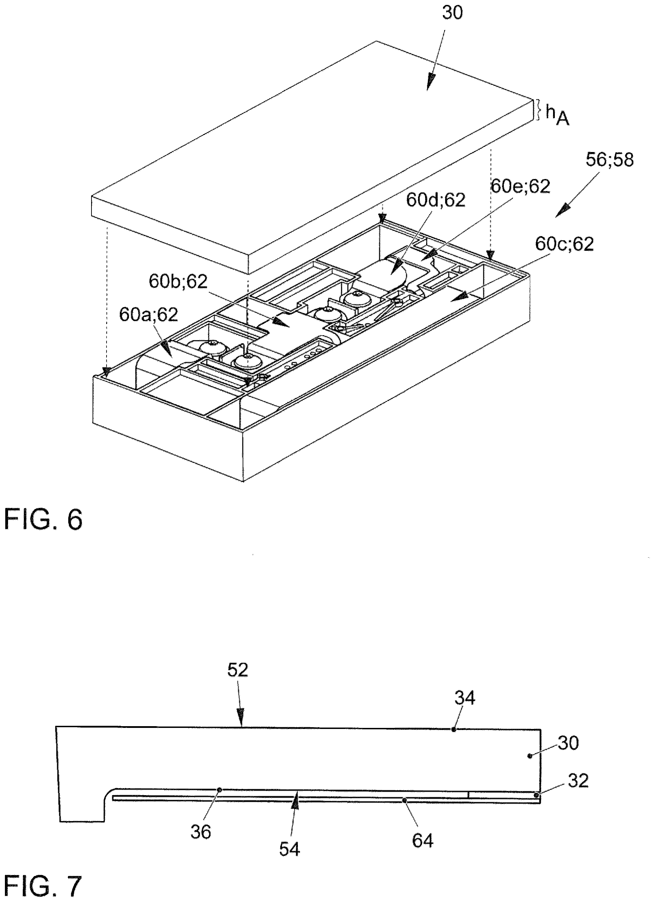

Figur 6 zeigt eine sogenannte Batterieanschlussbox, welche als Batteriesystemelement 58 Teil eines Batteriesystems 10 in einem Batteriesystemgehäuse sein kann. In der Batterieanschlussbox sind insbesondere elektrische Leistungsmodule, Sicherungselemente sowie sonstige Elektronikkomponenten verbaut. Dazu zählen auch fünf elektrisch leitende Elemente 60a, 60b, 60c, 60d, 60e, die als elektrische Leitungen 62 angesehen werden können. Wie in Figur 6 dargestellt, kann eine nur schematisch als Block 30 dargestellte Anordnung aus einer Vielzahl von Folienrollen (nicht dargestellt) in einem erfindungsgemäßen Batteriesystem 10 vorteilhaft eingesetzt werden, indem die eine Folienrolle oder mehrere Folienrollen (nicht einzeln dargestellt) in unmittelbarem Kontakt zu einer solchen Leitung 62 oder mehreren solchen elektrischen Leitungen 62 angeordnet werden. Besonders vorteilhaft ist es in diesem Zusammenhang, wenn zumindest die Bereiche der Folienrollen, welche in unmittelbarem Kontakt zu den elektrischen Leitungen 62 gelangen, mit einer elektrisch isolierenden Beschichtung oder einer Isolierungsfolie 64 versehen sind.

In Figur 7 ist diesbezüglich exemplarisch ein Block 30 mit einer Oberseite 34 und einer Unterseite 36 dargestellt, wobei die Außenoberfläche 54 der Unterseite 36 teilweise mit einer adhäsiven Beschichtung 32 versehen ist, um die Außenoberfläche 54 der Unterseite 36 mit einer Isolierungsfolie 64 zu verbinden. Der Block 30 mit den Folienrollen (nicht dargestellt) kann als oberseitiges Verschlusselement einer Batterieanschlussbox 56 dienen oder als Lückenfüller 12 zwischen einem nicht dargestellten oberseitigen Deckel der Batterieanschlussbox und den elektrischen Leitungen 62, um die Wärmeübertragung zu einem nicht dargestellten Kühlsystem zu verbessern.

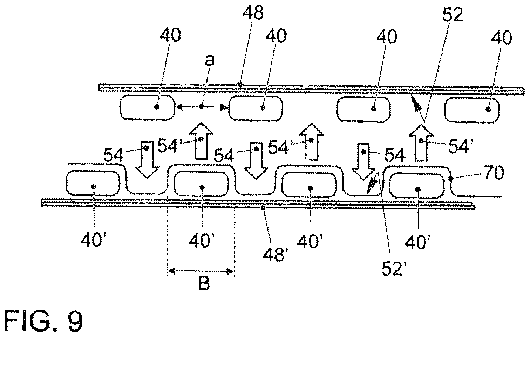

Figur 9 zeigt eine schematische Darstellung einer alternativen Anordnung von zwei Trägermatten 48, 48', auf welchen analog zu den Figuren 3 und 4 Folienrollen 40, 40' angeordnet sind. Die Anordnung erfolgt in der gezeigten Ausführungsform wiederum durch eine auf der jeweiligen Trägermatte 40, 40' aufgebrachte adhäsive Beschichtung 32, 32'. Zusätzlich ist in dieser Ausführungsform im Bereich einer Trägermatte (hier: im Bereich der unteren Trägermatte 48') eine Zusatzfolie 70 mäanderförmig derart angeordnet, dass sie eine oberseitige Deckschicht bildet.

Der Abstand A zwischen zwei benachbarten Folienrollen 40, 40' kann etwas größer, gleich groß oder etwas kleiner gewählt werden wie die Breite B der Folienrollen 40, 40' einschließlich der jeweiligen Dicke der Zusatzfolie 70. Hier ist der Abstand A etwas kleiner gewählt als die Breite B, aber derart, dass sich die zwei Trägermatten 48, 48' jeweils mit ihren Rollenseiten 52, 52' derart zueinander ausrichten und anordnen lassen, dass die Folienrollen 40, 40' der ersten Trägermatte 48 in die Lücken zwischen den Folienrollen 40' einer zweiten Trägermatte 48' einbringbar sind, insbesondere durch Verpressen. Dies erfolgt durch Bewegung der Trägermatten 48, 48' in Richtung der Pfeile 54, 54'. Mit der in Figur 9 gezeigten Anordnung ergibt sich ein besonders guter Wärmeübergang, insbesondere wenn als Zusatzfolie 70 eine Folie aus einem gut wärmeleitenden Werkstoff eingesetzt wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Es wird insbesondere darauf verwiesen, dass der Abstand A und die Breite B auf der jeweils gleichen Trägermatte 48, 48' und auch auf verschiedenen Trägermatten 48, 48' variierbar sind. Beispielsweise können auf einer Trägermatte 48, 48' in einem bestimmten Bereich Folienrollen 40, 40' mit einer geringeren Breite B angeordnet sein, wenn in diesem Bereich der Wärmeübergang in Erstreckungsrichtung in Hochrichtung, d.h. senkrecht zur Länge l und senkrecht zur Breite b, verbessert werden soll. Umgekehrt kann durch Verwendung von Folienrollen mit einer größeren Breite B in einem bestimmten Bereich der Wärmeübergang verringert werden, wenn dies entsprechend lokal erwünscht ist. Mit anderen Worten ausgedrückt, kann der lokale Wärmeübergang durch Variation der Breite B und/oder des Abstandes A bedarfsweise variiert werden.

### Bezugszeichenliste

- 10: Batteriesystem
- 12: Lückenfüller
- 14: Trägermatte
- 16: Zellmodul
- 18: Zellmodul-Kontaktfläche
- 20: Kühlsystem-Kontaktfläche
- 22: Kühlsystem
- 24: erste Wärmeleitplatten-Kontaktfläche
- 26: Wärmeleitplatte
- 28: zweite Wärmeleitplatten-Kontaktfläche
- 30: Block (gebildet aus einer Vielzahl von Folienrollen)
- 32: adhäsive Schicht / Beschichtung
- 34: Oberseite
- 36: Unterseite
- 38: Anordnung
- 40: Folienrollen
- 42: Rollenfüllung
- 44: Folienumhüllung
- 46: Schaumwerkstoff
- 48: Trägermatte
- 50: Oberseite (der Trägermatte)
- 52: Rollenseite
- 54: Pfeil
- 56: Quersteg
- 58: Batteriesystemelement
- 60: elektrisch leitendes Element
- 62: elektrische Leitung
- 64: Isolierungsfolie
- 66: erster Bauteil
- 68: zweiter Bauteil
- 70: Zusatzfolie

## Patentansprüche

1. Batteriesystem (10) für ein Kraftfahrzeug, das in einem Batteriesystemgehäuse angeordnet ist, das ferner mindestens ein Zellmodul (16) mit einem Zellmodulgehäuse und mindestens ein Kühlsystem (22) für das Zellmodul (16) aufweist,
**dadurch gekennzeichnet,**
**dass** das Batteriesystem (10) ferner mindestens eine, als Lückenfüller (12) dienende Anordnung (38) aus einer Vielzahl von Folienrollen (40) aufweist, die jeweils mindestens eine elastische Rollenfüllung (42) und eine die mindestens eine Rollenfüllung (42) umhüllende Folienumhüllung (44) umfasst, wobei mehrere Folienrollen (40) auf einer flächigen Trägermatte (48) angeordnet und fest mit dieser verbunden sind und die Folienrollen (40) zumindest teilweise
a) unmittelbar zwischen einer Wand eines Zellmodulgehäuses und dem mindestens einen Kühlsystem (22) angeordnet sind und/oder
b) unmittelbar zwischen dem Zellmodulgehäuse und einer zwischen dem Zellmodulgehäuse und dem mindestens einen Kühlsystem (22) angeordneten Wärmeleitplatte (26) angeordnet sind.

2. Batteriesystem (10) nach dem vorstehenden Anspruch, **dadurch gekennzeichnet, dass** die Rollenfüllung (42) ein elastisches Drahtgeflecht, ein elastisches Fasergebilde und/oder einen Schaumwerkstoff (46) umfasst.

3. Batteriesystem (10) nach einem der vorstehenden Ansprüche, **dadurch gekennzeichnet, dass** die Folienumhüllung (44) eine metallische Folie oder Beschichtung, eine Graphit aufweisende Folie oder Beschichtung, eine Kohlefasern aufweisende Folie und/oder eine Graphem aufweisende Folie umfasst.

4. Batteriesystem (10) nach einem der vorstehenden Ansprüche, **dadurch gekennzeichnet, dass** die Folienrollen (40) beabstandet zueinander auf einer Rollenseite (52) der Trägermatte (48) angeordnet sind.

5. Batteriesystem (10) nach dem vorstehenden Anspruch, **dadurch gekennzeichnet, dass** mindestens zwei Trägermatten (48) vorgesehen sind, auf welchen die Folienrollen (40) derart beabstandet zueinander angeordnet sind, dass die Trägermatten (48) jeweils mit den Rollenseiten (52) derart zueinander ausgerichtet und angeordnet werden können, dass die Folienrollen (40) einer ersten Trägermatte (48) zumindest teilweise in Lücken zwischen Folienrollen (40') einer zweiten Trägermatte (48') eingreifen können.

6. Batteriesystem (10) nach einem der vorstehenden Ansprüche, **dadurch gekennzeichnet, dass** die Folienrollen (40) eine im Querschnitt runde, quaderförmige oder trapezförmige Geometrie aufweisen.

7. Batteriesystem (10) nach einem der vorstehenden Ansprüche, **dadurch gekennzeichnet, dass** die Folienrollen (40) und/oder eine Trägermatte (48), auf welcher die Folienrollen (40) angeordnet sind, vollständig oder teilweise mit einer folienartigen Umhüllung (44) und/oder einer adhäsiven Beschichtung (32) versehen ist/sind.

8. Batteriesystem (10) nach einem der vorstehenden Ansprüche, **dadurch gekennzeichnet, dass** die Folienumhüllung (44) ein oder mehrere Öffnungen (Perforationen) aufweist.

## Claims

1. Battery system (10) for a motor vehicle, which is arranged in a battery system housing which further comprises at least one cell module (16) having a cell module housing and at least one cooling system (22) for the cell module (16),
**characterized in that**
the battery system (10) further comprises at least one arrangement (38) which serves as a gap filler (12) and is made up of a plurality of foil rolls (40), each of which comprises at least one resilient roll filling (42) and a foil wrap (44) which wraps around the at least one roll filling (42), a plurality of foil rolls (40) being arranged on a flat carrier mat (48) and firmly connected thereto and the foil rolls (40) being at least partially
a) arranged directly between a wall of a cell module housing and the at least one cooling system (22) and/or
b) arranged directly between the cell module housing and a heat conducting plate (26) which is arranged between the cell module housing and the at least one cooling system (22).

2. Battery system (10) according to the preceding claim,
**characterized in that** the roll filling (42) comprises a resilient wire mesh, a resilient fiber assembly and/or a foam material (46).

3. Battery system (10) according to either of the preceding claims, **characterized in that** the foil wrap (44) comprises a metal foil or coating, a foil or coating comprising graphite, a foil comprising carbon fibers and/or a foil comprising grapheme.

4. Battery system (10) according to any of the preceding claims, **characterized in that** the foil rolls (40) are arranged at a distance from one another on a roll side (52) of the carrier mat (48).

5. Battery system (10) according to the preceding claim,
**characterized in that** at least two carrier mats (48) are provided, on which the foil rolls (40) are arranged at a distance from one another such that the carrier mats (48) can each be aligned and arranged with the roll sides (52) relative to one another such that the foil rolls (40) of a first carrier mat (48) can at least partially engage in gaps between foil rolls (40') of a second carrier mat (48').

6. Battery system (10) according to any of the preceding claims,
**characterized in that** the foil rolls (40) have a round, cuboidal or trapezoidal geometry in cross section.

7. Battery system (10) according to any of the preceding claims,
**characterized in that** the foil rolls (40) and/or a carrier mat (48) on which the foil rolls (40) are arranged are completely or partially provided with a foil-like wrap (44) and/or an adhesive coating (32).

8. Battery system (10) according to any of the preceding claims, **characterized in that** the foil wrap (44) has one or a plurality of openings (perforations).

## Revendications

1. Système de batterie (10) pour un véhicule automobile, qui est disposé dans un boîtier de système de batterie, qui présente en outre au moins un module cellulaire (16) comportant un boîtier de module cellulaire et au moins un système de refroidissement (22) pour le module cellulaire (16),
**caractérisé en ce**
**que** le système de batterie (10) présente en outre au moins un agencement (38) servant de remplissage d'espace (12), constitué d'une pluralité de rouleaux de film (40), qui comprend respectivement au moins un remplissage de rouleau (42) élastique et une enveloppe de film (44) entourant l'au moins un remplissage de rouleau (42), dans lequel plusieurs rouleaux de film (40) sont disposés sur un tapis support (48) plat et sont reliés fixement à celui-ci, et les rouleaux de film (40) sont au moins partiellement
a) disposés directement entre une paroi d'un boîtier de module cellulaire et l'au moins un système de refroidissement (22) et/ou
b) disposés directement entre le boîtier de module cellulaire et une plaque conductrice de chaleur (26) disposée entre le boîtier de module cellulaire et l'au moins un système de refroidissement (22).

2. Système de batterie (10) selon la revendication précédente,
**caractérisé en ce que** le remplissage de rouleau (42) comprend un treillis métallique élastique, une structure fibreuse élastique et/ou un matériau en mousse (46).

3. Système de batterie (10) selon l'une des revendications précédentes, **caractérisé en ce que** l'enveloppe de film (44) comprend un film ou un revêtement métallique, un film ou un revêtement présentant du graphite, un film présentant des fibres de carbone et/ou un film présentant des graphèmes.

4. Système de batterie (10) selon l'une des revendications précédentes, **caractérisé en ce que** les rouleaux de film (40) sont disposés à distance les uns des autres sur un côté de rouleau (52) du tapis de support (48).

5. Système de batterie (10) selon la revendication précédente,
**caractérisé en ce qu'il** est prévu au moins deux tapis de support (48) sur lesquels les rouleaux de film (40) sont disposés à une distance telle l'un de l'autre que les tapis de support (48) peuvent être alignés et disposés respectivement avec les côtés de rouleau (52) l'un par rapport à l'autre de telle sorte que les rouleaux de film (40) d'un premier tapis de support (48) peuvent venir en prise au moins partiellement dans des espaces entre des rouleaux de film (40') d'un second tapis de support (48').

6. Système de batterie (10) selon l'une des revendications précédentes, **caractérisé en ce que** les rouleaux de film (40) présentent une géométrie de section transversale ronde, parallélépipédique ou trapézoïdale.

7. Système de batterie (10) selon l'une des revendications précédentes, **caractérisé en ce que** les rouleaux de film (40) et/ou un tapis de support (48) sur lequel les rouleaux de film (40) sont disposés est/sont entièrement ou partiellement pourvu(s) d'une enveloppe de type film (44) et/ou d'un revêtement adhésif (32).

8. Système de batterie (10) selon l'une des revendications précédentes, **caractérisé en ce que** l'enveloppe de film (44) présente une ou plusieurs ouvertures (perforations).
